# EUROPÄISCHE PATENTSCHRIFT

(11) **EP 3 102 397 B1**
(45) Veröffentlichungstag und Bekanntmachung des Hinweises auf die Patenterteilung: **25.04.2018**
(21) Anmeldenummer: 15705521.1
(22) Anmeldetag: 04.02.2015
(51) Int. Cl.: B29C 70/86, B29C 37/00, C22C 49/00, C22C 47/14, B22F 3/10

(54) **VERBUNDBAUTEIL UND VERFAHREN ZUR HERSTELLUNG DES VERBUNDBAUTEILS**
COMPOSITE COMPONENT AND METHOD FOR PRODUCING SAID COMPOSITE COMPONENT
ÉLÉMENT COMPOSITE ET PROCÉDÉ DE FABRICATION CORRESPONDANT

(30) Priorität: 07.02.2014 DE 102014001868
(43) Veröffentlichungstag der Anmeldung: 14.12.2016
(73) Patentinhaber: Fraunhofer-Gesellschaft zur Förderung der angewandten Forschung e.V., 80686 München (DE); Faserinstitut Bremen e.V., 28359 Bremen (DE)
(72) Erfinder: HUTSCH, Thomas, 01219 Dresden (DE); WEISSGÄRBER, Thomas, 01328 Dresden (DE); KIEBACK, Bernd, 01728 Possendorf (DE); LANG, Anna, 28217 Bremen (DE); HERRMANN, Axel, 21682 Stade (DE)
(74) Vertreter: Pfenning, Meinig & Partner mbB
(86) Internationale Anmeldenummer: PCT/EP2015/052292
(87) Internationale Veröffentlichungsnummer: WO 2015/118005

(56) Entgegenhaltungen:
- EP-A1- 0 161 828
- WO-A1-2005/023526
- WO-A1-2013/175026
- FR-A1- 2 768 076

## Beschreibung

Die Erfindung betrifft ein Verbundbauteil und ein Verfahren zu seiner Herstellung. Es handelt sich dabei um Verbundbauteile bei denen zwei aus Metall gebildete Elemente an zwei gegenüberliegend angeordneten Oberflächen einer mit Fasern gebildeten Struktur mit dieser verbunden sind.

Solche Verbundbauteile finden in der jüngeren Vergangenheit häufig Anwendung, wenn der Leichtbauaspekt und weitere Anforderungen von Bauteilen zu erfüllen sind. Häufig sind die metallischen Komponenten für die Verbindung mit weiteren Bauteilen oder Elementen erforderlich.

Für die Herstellung solcher Verbundbauteile werden bisher verschiedene Fügeverfahren, wie beispielsweise das Schweißen, das Kleben sowie Niet- oder Schraubverbindungen eingesetzt. Die stoffschlüssigen Verbindungen durch Schweißen oder Kleben erreichen häufig keine ausreichende Festigkeit, was sich insbesondere über die Lebensdauer nachteilig weiter verschlechtern kann.

Bei den mechanischen Verbindungen durch Nieten oder Schrauben kommt es aber zu einer Beschädigung der Faserstruktur, was wiederum die Festigkeit der Faserstruktur und somit des gesamten Verbundbauteils reduziert. Solche Bereiche können insbesondere Ausgangspunkte von Rissen oder anderen Defekten sein, die sich bei fortschreitender Belastung vergrößern und zur Schädigung des Verbundbauteils führen können, so dass ein kostenintensiver Austausch erforderlich wird oder es gar zu einer Gefährdung für Leib und Leben kommen kann.

Um diesen Nachteilen entgegen zu treten wurde in DE 2009 048 709 A1 vorgeschlagen, ein Verbundbauteil aus einem Faserverbundwerkstoff und Metall durch ein Gießverfahren herzustellen, bei dem ein Teil des Faserverbundes beim Gießen von der Metallschmelze eingeschlossen werden soll, so dass nach dem Erstarren der Schmelze zumindest ein Teil der Fasern in Metall eingebettet sind.

Dabei ist es aber nachteilig, dass infolge der hohen Schmelztemperaturen des eingesetzten Metalls, die beim Gießen auch erreicht werden müssen, entweder eine Beschädigung der Fasern auftreten kann bzw. nicht alle Faserarten einsetzbar sind. Üblicherweise können dabei nur relativ hochtemperaturstabile Fasern genutzt werden, was mit erhöhten Kosten verbunden ist.

Außerdem kann es zu Problemen wegen des Benetzungsverhaltens der Faseroberflächen mit der Schmelze kommen, so dass es zu Hohlräumen oder Lunkern in diesem Bereich kommen kann, die wiederum die Festigkeit nachteilig beeinflussen.

Soll die Herstellung durch Druckgießen erfolgen kann es zu einer Beschädigung der Faserstruktur infolge der dabei wirkenden hohen Kräfte und Beschleunigungen auf die Faserstruktur kommen, die beim Druckgießen auch noch ungleichförmig auf die Faserstruktur wirken können.

Es ist daher Aufgabe der Erfindung, Verbundbauteile, die mit Metall und Strukturen aus Fasern hergestellt sind, zur Verfügung zu stellen, die einfach und kostengünstig herstellbar sind und dabei eine hohe Festigkeit auch über längere Einsatzzeiträume aufweisen.

Erfindungsgemäß wird diese Aufgabe mit Verbundbauteilen, die die Merkmale des Anspruchs 1 aufweisen, gelöst werden. Die Herstellung solcher Verbundbauteile kann mit einem Verfahren nach Anspruch 10 erfolgen.

Vorteilhafte Ausgestaltungen und Weiterbildungen der Erfindung können mit in untergeordneten Ansprüchen bezeichneten Merkmalen realisiert werden.

Ein erfindungsgemäßes Verbundbauteil soll so ausgebildet sein, dass eine mit Fasern gebildete flächige Frei- und/oder Hohlräume aufweisende Struktur zumindest bereichsweise an zwei gegenüberliegenden Oberflächen mit jeweils einem aus einem Metall bestehenden Element eingefasst ist. Dabei ist die flächige Struktur mit den Elementen stoffschlüssig und/oder formschlüssig miteinander verbunden. Eine stoffschlüssige und/oder formschlüssige Verbindung der Struktur mit den Elementen ist durch eine Sinterung mindestens eines metallischen Pulvers, bei der mindestens ein metallisches Element aus dem Pulver herstellbar ist, erreicht worden, indem Frei- oder Hohlräume der Struktur mit Metall gefüllt sind. Bevorzugt sollten die beiden an gegenüberliegenden Oberflächen der mit den Fasern gebildeten Struktur angeordneten aus Metall gebildeten Elemente so ausgebildet werden. Nach dem Sintern sind Oberflächen der Fasern zumindest teilweise von dem Metall bedeckt und Fasern können dabei zumindest teilweise von Metall umschlossen sein, so dass neben einer stoffschlüssigen Verbindung von Fasern mit Metall auch eine formschlüssige Verbindung durch die Sinterung erreicht werden kann. Im Gegensatz zum Gießen sind deutlich geringere Temperaturen für das Sintern erforderlich, so dass Fasern thermisch während der Herstellung des Verbundbauteils nicht so belastet oder geschädigt werden, wie beim Gießen. Außerdem tritt das Benetzungsproblem nicht in dem Maße auf.

Armierungselemente können in den Elementen ausgebildete Hohlräume eingeführt werden darin stoffschlüssig durch Sinterung mit den Elementen fixiert. Hierfür können die Oberflächen der Armierungselemente mit geeigneten Funktionsschichten versehen worden sein. Funktionsschichten können beispielsweise mit einem geeigneten Kleber, einem Lot oder einem gebundenen sinterbaren Pulver gebildet sein.

Eine Fixierung von Armierungselementen innerhalb der durch Sinterung erhaltenen Elemente werden, bei der Sinterung erreicht bei der die Armierungselemente stoffschlüssig und/oder formschlüssig mit den Elementen verbunden werden. Dabei sollten die Armierungselemente bevorzugt zumindest in einem Bereich senkrecht zur Ebene der Struktur eine von einer Geraden abweichende geometrische Gestalt aufweisen, um eine formschlüssige Verbindung zu erreichen. Armierungselemente können dabei beispielsweise wellenförmig oder ein- oder mehrfach abgewinkelt ausgebildet sein. Dadurch sind sie nach der Sinterung vom Metall der Elemente umgeben und infolge der von einer Geraden abweichenden Form können sie ähnlich wie Anker Kraftwirkungen aus mehreren verschiedenen Achsrichtungen durch Formschluss besser kompensieren, als dies mit gerade ausgebildeten Armierungselementen erreichbar ist, die in einer senkrecht zu ihrer Längsachse ausgerichteten Achsrichtung eine erheblich größere Festigkeit erreichen, als in anderen Achsrichtungen und dabei insbesondere der Achsrichtung, die parallel zu ihrer Längsachse ausgerichtet ist.

Armierungselemente sollten eine Querschnittsfläche aufweisen, deren Größe so gewählt ist, dass sie problemlos, d.h. ohne eine Beschädigung und möglichst auch keine Verformung von Fasern einer vorgegebenen Struktur bewirken, die mit den Fasern gebildet ist, wenn sie durch Frei- oder Hohlräume der Struktur hindurchgeführt werden.

Für eine Weiterverarbeitung und insbesondere für die vereinfachte Herstellung großformatiger Verbundbauteile ist es vorteilhaft, einen oder mehrere über den äußeren Rand der Elemente aus Metall überstehende(r) Bereich(e) der Struktur vorzusehen. Über den Rand überstehende Fasern der Struktur können dann mit einer weiteren mit Fasern gebildeten Struktur formschlüssig und/oder stoffschlüssig verbunden werden. Hierfür sind geeignete textile Verbindungsarten bekannt. So können beispielsweise Schlaufen der Struktur mittels Schlaufen der weiteren Struktur verbunden werden. Im Anschluss daran können die Fasern beider Strukturen zumindest in ihrem Verbindungsbereich in eine Matrix eines Werkstoffs eingebettet werden. Bevorzugt kann dies eine metallische oder polymere Matrix sein. Metalle sind besonders für aus Metall- oder Keramikfasern gebildete Strukturen geeignet. Die Einbettung kann dabei durch Eintauchen in eine Schmelze oder durch eine Sinterung erreicht werden.

Bei Strukturen, die mit anderen Fasern, wie z.B. aus Glas, Kunststoff, Kohlenstoff gebildet sind, kann das Einbetten in ein Polymer mit ebenfalls bekannten Verfahren, wie Eintauchen, Rakeln, Drucken, Infiltration u.a.m. erreicht werden.

Fasern die für die Struktur und/oder die weitere Struktur genutzt werden können, können aus einem Werkstoff gebildet sein, der ausgewählt ist aus Metallen, Glas, Kohlenstoff, Kunststoff und Keramik. Weitere Beispiele für geeignete Faserwerkstoffe sind SiC, Borfasern, Textilglasfasern, Aramid- oder Basaltfasern.

Die Armierungselemente können aus einem Werkstoff gebildet sein, der ausgewählt ist aus Metallen, Kunststoff und Keramik und die Elemente können aus einem Werkstoff gebildet sein, der ausgewählt ist aus Eisen, Kupfer, Aluminium, Titan und Mangan oder einer Legierung dieser Metalle.

Bei einem erfindungsgemäßen Verbundbauteil kann mindestens ein Element als ein Befestigungselement für oder für eine Befestigung mindestens eines weiteren Elements ausgebildet sein. So kann ein aus Metall gebildetes Element eine Oberflächenkontur aufweisen, die für eine formschlüssige Verbindung mit einem anderen eine komplementäre Oberflächenkontur aufweisenden Element ausgebildet ist. Dies kann beispielsweise ein Bajonettverschluss sein. Ein Element kann aber auch für eine Schraub- oder Nietverbindung mit anderen Elementen ausgebildet sein. Die Verbindung kann dabei bevorzugt formschlüssig aber auch durch Stoff- oder Kraftschluss (z.B. Presspassung) zu anderen Elementen hergestellt werden.

Durch so erreichbare Verbindungen zu anderen Elementen kann eine Schädigung der tragenden mit Fasern gebildeten Struktur während der Nutzung vermieden bzw. jedoch zumindest stark behindert werden. Insbesondere die Lage und Ausrichtung der Fasern kann so nicht verändert werden, so dass die ursprüngliche Auslegung der Struktur für bestimmte Beanspruchungen nicht beeinträchtigt wird.

Mindestens eines der Elemente kann aus metallischem Werkstoff gebildet sein, dessen Zusammensetzung sich ausgehend von der der mit den Fasern gebildeten Struktur zugewandten Oberfläche bis zur dieser gegenüber liegend angeordneten Oberfläche verändert. So kann beispielsweise der Bereich, der in unmittelbarem Kontakt bzw. in der Nähe der Fasern der Struktur angeordnet ist, aus einer Legierung gebildet sein, die eine niedrigere Schmelz- und/oder Sintertemperatur aufweist, als weiter davon entferntere Bereiche mit größeren Abständen zu Fasern. Unterschiedliche Legierungen innerhalb der aus Metall gebildeten Elemente können aber auch unterschiedliche Anforderungen berücksichtigen. Dies können beispielsweise die Festigkeit, Duktilität oder vieles andere mehr, als zu berücksichtigende Eigenschaften sein.

Armierungselemente können in Bezug zu mindestens einer Achse, in der eine Kraftwirkung auf das Verbundbauteil wirkt, ausgerichtet angeordnet sein. Sie können dabei in mindestens einer Reihenanordnung, die parallel zu der Kraftwirkungsachsrichtung ausgerichtet ist, angeordnet sein.

Mehrere Armierungselemente können aber auch jeweils mit konstantem Abstand zu dem äußeren Rand von zumindest einem der aus Metall gebildeten Elemente angeordnet sein. Sie können dabei eine Reihenanordnung parallel zu einem äußeren Rand, der beispielsweise drei-, vier- oder mehreckig an einem aus Metall gebildeten Element ausgebildet ist, bilden. Bei kreisförmigen Randkonturen von aus Metall gebildeten Elementen kann die Anordnung von Armierungselementen kreisförmig gewählt sein.

In jedem Fall sollten Armierungselemente jeweils in konstanten Abständen zueinander angeordnet sein. Die Anordnung und Ausrichtung von Fasern der Struktur kann bei der Anordnung von Armierungselementen berücksichtigt werden.

Die mit den Fasern gebildete Struktur kann zwei- oder dreidimensional, mit Schlaufen, als ebene oder gekrümmte Fläche und in Form eines Rovings, eines Bandes, eines Gestrickes, Gewebes, Gewirkes, als Filz, Matte, Netz, Gitter, Geflecht und/oder mehrlagig ausgebildet sein. Es können aber auch freigeformte Strukturen, auch als Halbzeug oder Prepreg textiler Fasern eingesetzt werden.

Bei der Herstellung erfindungsgemäßer Verbundbauteile wird eine mit Fasern gebildete Struktur an zwei gegenüberliegend angeordneten Oberflächen mit jeweils einem aus einem Metall gebildeten Element verbunden.

Dabei werden in einer Alternative Armierungselemente durch Frei- oder Hohlräume der Struktur zwischen Fasern hindurch und in in den Elementen vorhandene oder ausgebildete Hohlräume eingeführt, wenn die Elemente an zwei gegenüberliegenden Oberflächen der Struktur angeordnet sind. Im Anschluss daran wird eine stoffschlüssige Verbindung durch Sintern zwischen den Armierungselementen und den Elementen ausgebildet. Die in den Elementen aus Metall ausgebildeten Hohlräume sollten so dimensioniert sein, dass die Armierungselemente in diese eingeführt werden können, wobei ein ausreichendes Spiel zwischen der inneren Oberfläche der Hohlräume und der äußeren Oberfläche der Armierungselemente eingehalten sein sollte. Das Spiel oder Spaltmaß sollte jedoch so gering wie möglich sein, um die stoffschlüssige Verbindung der Armierungselemente in den Hohlräumen der Elemente sicher ausbilden zu können. Hohlräume in Elementen können dabei Bohrungen, bevorzugt Sacklochbohrungen sein.

In einer zweiten Alternative, die allein oder in Verbindung mit der ersten Alternative durchgeführt werden kann, wird mindestens ein Element aus pulverförmigem Metall an einer Oberfläche der Struktur durch eine Sinterung unter Einsatz eines Formwerkzeuges ausgebildet, bei der eine stoff- und formschlüssige Verbindung zwischen Oberflächen von Fasern der Struktur auch in Hohl- und/oder Freiräumen der mit Fasern gebildeten Struktur und/oder dem Metall des jeweiligen Elements und Armierungselementen, die während der Sinterung zumindest teilweise während der Sinterung von pulverförmigen Metall umschlossen sind, erreicht. Selbstverständlich können auch beide aus Metall gebildete Elemente so durch Sinterung eines metallischen Pulvers ausgebildet werden. Bei geeigneter Auswahl einer mit Fasern gebildeten Struktur und Metallpulver kann erreicht werden, dass auch eine Versinterung von Metall, das von beiden Oberflächen einer mit Fasern gebildeten Struktur zugeführt worden ist, erreicht werden kann, so dass die beiden Elemente aus Metall, die an gegenüberliegenden Oberflächen der Struktur ausgebildet worden sind auch zumindest teilweise durch Sinterung stoffschlüssig miteinander verbunden sind.

Wie bereits angedeutet können dabei die Armierungselemente, die durch Frei- oder Hohlräume zwischen Fasern der Struktur hindurchgeführt worden sind, vom pulverförmigen Metall vor der Sinterung zumindest teilweise umschlossen sein, und nach der Sinterung eine stoffschlüssige Verbindung zwischen den aus mit Metall gebildeten Elementen und den Armierungselementen erreicht werden. Bei Armierungselementen, die nicht geradlinig ausgebildet sind, sind diese nach dem Sintern ebenfalls umgeben. Wegen der Form kann aber auch ein Formschluss erreicht werden.

Eine Sinterung sollte bei gleichzeitiger Druckkraftausübung auf das metallische Pulver bevorzugt durch Heißpressen oder mittels Funkenentladungssintern (Spark-Plasma-Sinterung -SPS) durchgeführt werden. Dabei können in kurzer Zeit die erforderlichen Temperaturen und eine ausreichend dichte Sinterung erreicht werden.

Insbesondere bei der Sinterung sollte die mit den Fasern gebildete Struktur bei der Herstellung der stoffschlüssigen Verbindung mit ihrem äußeren Rand zwischen zwei Hälften eines Formwerkzeuges klemmend gehalten werden.

Dadurch kann eine gewünschte Lage dieser Struktur und eine Verformung oder Verschiebung während des Sinterns vermieden werden.

Die Verbindung zwischen der mit den Fasern gebildeten Struktur und den Elementen aus Metall kann so ausgebildet werden, dass diese Struktur in einem äußeren Randbereich über den äußeren Rand der Elemente übersteht, was z.B. wie vorab gerade beschrieben mittels der klemmenden Halterung zwischen zwei Hälften eines Formwerkzeuges erreichbar ist. Der überstehende Rand der Struktur kann so mit einer weiteren Struktur, die ebenfalls aus Fasern gebildet ist, formschlüssig und/oder stoffschlüssig verbunden werden. Dies kann mit einer aus der Textiltechnik bekannten technischen Lösung, z.B. durch Verschlingung, Flechten, Spleißen bzw. Verwebung von Fasern beider Strukturen erreicht werden. Es kann auch ein Laminat eingesetzt werden. Im Anschluss daran kann der überstehende Rand der mit den Fasern gebildeten Struktur und zumindest der Bereich der weiteren Struktur, der mit der Struktur verbunden ist, gemeinsam in eine Matrix, eines bevorzugt polymeren Werkstoffs eingebettet werden. Bei Fasern aus Metall oder Keramik kann die Matrix bevorzugt mit einem Polymer oder Metall gebildet werden. Dadurch kann ein größeres Verbundbauteil erhalten werden, das in einem Bereich um Elemente aus Metall oder aus einem Faserverbundmaterial, das mit Fasern und dem Matrixwerkstoff gebildet ist.

Bei der Erfindung können für die mit Fasern gebildete Struktur und ggf. auch eine weitere Struktur, die Fasern mit einer Funktionsschicht beschichtet sein, die beispielsweise eine verbesserte Anbindung von Metall ermöglichen oder einen Schutz der Fasern vor den erhöhten Temperaturen oder einen chemischen Angriff (chem. Korrosion) ver- oder zumindest behindern können. Funktionsschichten für Fasern können z.B. Metalle, Polymere sein. Eine Funktionsschicht auf Fasern kann aber auch ein Lot sein, mit dem eine stoffschlüssige Verbindung zwischen der mit Fasern gebildeten Struktur und Elementen aus Metall erreicht werden kann.

Bei einem erfindungsgemäßen Verbundbauteil kann eine Anpassung an bei einem Einsatz wirkende Kräfte oder Momente durch eine lokal differenzierte Ausbildung der mit Fasern gebildeten Struktur und/oder einer weiteren Struktur und/oder bei der Ausbildung bzw. Auswahl der Elemente aus Metall und/oder der Dimensionierung, geometrischen Gestalt, der Anordnung von Armierungselementen sowie der Auswahl der für die Struktur(en), die Elemente aus Metall und/oder die Armierungselemente eingesetzten Werkstoffe, erreicht werden. So können beispielsweise eingesetzte Metalle lokal unterschiedlich gewählt werden oder sich bei eingesetzten Legierungen lokal unterschiedliche Metallanteile der Legierungselemente gewählt werden.

Erfindungsgemäße Verbundbauteile können im Fahrzeugbau, für Sportartikel, -geräte oder auch in Maschinen und Anlagen eingesetzt und dabei auch als Verbindungsmodul bezeichnet werden. Mit einem Verbindungsmodul können beispielsweise andere Teile oder Bauteile miteinander verbunden werden.

Nachfolgend soll die Erfindung anhand von Beispielen näher erläutert werden.

Dabei zeigen:
- Figur 1: in einer schematischen Schnittdarstellung ein Beispiel eines erfindungsgemäßen Verbundbauteils mit Armierungselementen und
- Figur 2: ein Beispiel für die Herstellung eines erfindungsgemäßen Verbundbauteils durch Sinterung.

Einzelne in den Figuren gezeigte und dazu erläuterte Aspekte oder Merkmale sollen nicht auf das jeweilige Beispiel beschränkt sein. Sie können auch in unterschiedlichster Form miteinander kombiniert werden. Dies betrifft sowohl die jeweilige Ausbildung von Verbundbauteilen, wie auch die Möglichkeiten zu ihrer Herstellung.

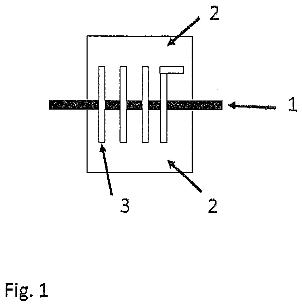

In Figur 1 ist ein Beispiel eines erfindungsgemäßen Verbundbauteils gezeigt, bei dem die beiden Elemente 2 aus Aluminium an zwei gegenüberliegenden Oberflächen einer mit Fasern gebildeten Struktur 1 angeordnet oder dort durch eine Sinterung ausgebildet worden sind.

Durch Freiräume zwischen den Fasern der Struktur 1 oder durch Hohlräume in der Struktur 1 sind Armierungselemente 3 bei diesem Beispiel senkrecht zur durch die Struktur 1 vorgegebenen Ebene ausgerichtet, hindurch geführt. In den Elementen 2 aus Metall waren komplementär ausgebildete Bohrungen als Hohlräume ausgebildet, in die Teile der Armierungselemente 3 eingeführt und zur Ausbildung der Verbindung zwischen den Elementen 2 und der Struktur 1 stoffschlüssig in den Hohlräumen/Bohrungen mit den Elementen 2 verbunden worden sind. Die stoffschlüssige Verbindung wird wie im allgemeinen Teil der Beschreibung erläutert durch Sinterung erreicht. In nichtdargestellter Form können die Armierungselemente 3 auch in einem Winkel ungleich 90° für die Herstellung der Verbindung ausgerichtet sein.

Die Struktur 1 ist bei diesem Beispiel aus einem Glasfasergewebe gebildet. Sie weist einen über den äußeren Rand der Elemente 2 überstehenden Bereich auf, der nicht von Metall überdeckt ist. Dieser überstehende Bereich, kann wie ebenfalls im allgemeinen Teil der Beschreibung erläutert worden ist, mit einer weiteren Struktur, die ebenfalls mit Fasern gebildet ist, formschlüssig und/oder stoffschlüssig verbunden und ggf. dann der überstehende Bereich mit dem verbundenen Bereich der weiteren Struktur in eine Matrix eines anderen Werkstoffs eingebettet werden.

Das ganz rechts angeordnete Armierungselement 3 ist beispielhaft so ausgebildet, dass es an seinen stirnseitigen Enden abgewinkelt ist, so dass durch Formschluss eine festere Verbindung erreicht werden kann.

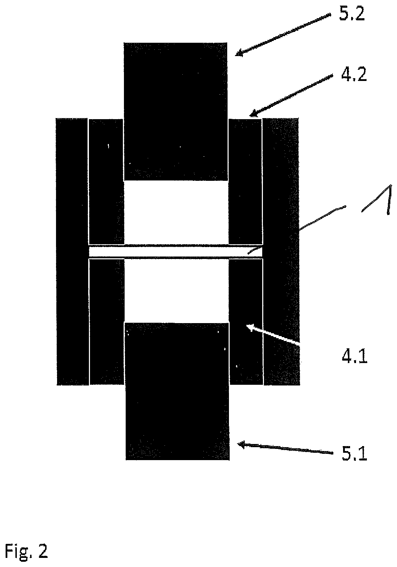

Mit Figur 2 soll eine andere Möglichkeit zur Herstellung erfindungsgemäßer Verbundbauteile verdeutlicht werden. Die Herstellung erfolgt dabei mit einem Sinterverfahrensschritt.

Bei dem gezeigten Beispiel wird zuerst eine mit Fasern gebildete Struktur 1 zwischen zwei Hälften 4.1 und 4.2 eines Formwerkzeugs an äußeren Rändern eingeklemmt und so im Formwerkzeug fixiert. Vor oder nach der Fixierung können Armierungselemente 3 zum Beispiel aus Metall durch Freiräume zwischen Fasern der Struktur 1 hindurchgeführt werden (nicht gezeigt). Dabei sollte, wie auch beim Beispiel nach Figur 1 zumindest eine Beschädigung von Fasern der Struktur 1 und möglichst auch eine Verschiebung von Fasern vermieden werden.

Anschließend wird Aluminiumpulver in das Formwerkzeug von beiden Seiten der Struktur 1 eingefüllt und das Formwerkzeug mit zwei Presstempeln 5.1 und 5.2, wie sie beim Funkenentladungssintern (SPS) üblicherweise eingesetzt werden, das Aluminiumpulver im Formwerkzeug eingeschlossen und durch Bewegung der Pressstempel in jeweils entgegengesetzte Richtung erfolgt eine Verdichtung des Aluminiumpulvers. Die Sinterung erfolgt dann bei angelegter elektrischer Spannung bei Temperaturen im Bereich 520 °C bis maximal 570 °C, bei einem auf das Aluminiumpulver wirkenden Druck von 28 MPa. Die Heizrate kann mit 100 K/min gewählt werden. Insbesondere die erforderliche Sintertemperatur liegt deutlich unterhalb der für ein Gießen erforderlichen Temperatur.

Bei Armierungselementen 3 aus Aluminium oder einer geeigneten Aluminiumlegierung kann zwischen den aus Aluminium gebildeten Elementen 2 und den Armierungselementen 3 eine stoffschlüssige Verbindung durch Sinterung erreicht werden.

Bei der Sinterung gelangt Metallpulver in Freiräume und Hohlräume der Struktur 1, so dass auch zumindest eine stoffschlüssige Verbindung von Aluminium und Fasern erreicht werden kann. In bestimmten Fällen kann auch eine formschlüssige Verbindung erreicht werden, wenn Aluminium oder bei anderen Beispielen ein anderes Metall Fasern der Struktur 1 zumindest mit mehr als 50 % umschließt. Bei geeigneter Auswahl kann bei der Sinterung auch eine stoffschlüssige Sinterung von Aluminium oder einem anderen Metall erreicht werden, das von beiden Seiten der Struktur 1 im Formwerkzeug vorlag.

Auch bei dieser Möglichkeit zur Herstellung erfindungsgemäßer Verbundbauteile liegt ein äußerer Randbereich der Struktur 1 vor, der nicht von Metall überdeckt ist. Dies ist zumindest der Bereich der Struktur 1, der für die klemmende Fixierung im Formwerkzeug genutzt worden ist.

## Patentansprüche

1. Verbundbauteil, bei dem eine mit Fasern gebildete flächige Frei- und/oder Hohlräume aufweisende Struktur (1) zumindest bereichsweise an zwei gegenüberliegenden Oberflächen mit jeweils einem aus einem Metall bestehenden Element (2) eingefasst ist, und die flächige Struktur (1) mit den Elementen (2) stoffschlüssig und/oder formschlüssig miteinander verbunden sind, wobei
eine stoffschlüssige und/oder formschlüssige Verbindung mittels durch Hohlräume oder Freiräume in der Struktur (1) hindurch geführte Armierungselemente (3) durch eine Sinterung, die zumindest im Bereich der Struktur (1) senkrecht zur Ebene der flächigen Struktur (1) ausgerichtet sind, erreicht ist;
und
eine stoffschlüssige und/oder formschlüssige Verbindung der Struktur (1) mit den Elementen (2) durch eine Sinterung mindestens eines metallischen Pulvers, bei der mindestens ein metallisches Element (2) aus dem Pulver herstellbar ist, erreicht worden ist, indem Frei- oder Hohlräume der Struktur (1) mit Metall gefüllt sind, erreicht ist.

2. Verbundbauteil nach Anspruch 1, **dadurch gekennzeichnet, dass** Armierungselemente (3) in in den Elementen (2) ausgebildete Hohlräume eingeführt und darin stoffschlüssig durch Sinterung mit den Elementen (2) fixiert sind.

3. Verbundbauteil nach Anspruch 1 oder 2, **dadurch gekennzeichnet, dass** Armierungselemente (3) innerhalb der durch Sinterung erhaltenen Elemente (2) durch die Sinterung stoffschlüssig und/oder formschlüssig mit den Elementen (2) verbunden sind, wobei die Armierungselemente bevorzugt zumindest in einem Bereich senkrecht zur Ebene der Struktur (1) eine von einer Geraden abweichende geometrische Gestalt aufweisen, um eine formschlüssige Verbindung zu erreichen.

4. Verbundbauteil nach einem der vorhergehenden Ansprüche, **dadurch gekennzeichnet, dass** ein oder mehrere über den äußeren Rand der Elemente (2) überstehende(r) Bereich(e) der Struktur (1) mit einer weiteren mit Fasern gebildeten Struktur formschlüssig und/oder stoffschlüssig verbunden und die Fasern zumindest im Verbindungsbereich der Struktur (1) mit der weiteren Struktur bevorzugt in eine metallische oder polymere Matrix eingebettet sind.

5. Verbundbauteil nach einem der vorhergehenden Ansprüche, **dadurch gekennzeichnet, dass** die Fasern der Struktur (1) und/oder der weiteren Struktur aus einem Werkstoff gebildet ist/sind, der ausgewählt ist aus Metallen, Glas, Kohlenstoff, Kunststoff, Aramid und Keramik und
die Armierungselemente (3) aus einem Werkstoff gebildet sind, der ausgewählt ist aus Metallen, Kunststoff und Keramik und
die Elemente (2) aus einem Werkstoff gebildet sind, der ausgewählt ist aus Eisen, Kupfer, Aluminium, Titan und Mangan oder einer Legierung dieser Metalle.

6. Verbundbauteil nach einem der vorhergehenden Ansprüche, **dadurch gekennzeichnet, dass** mindestens ein Element (2) als ein Befestigungselement für oder für eine Befestigung mindestens eines weiteren Elements ausgebildet ist.

7. Verbundbauteil nach einem der vorhergehenden Ansprüche, **dadurch gekennzeichnet, dass** mindestens eines der Elemente (2) aus metallischem Werkstoff gebildet ist, dessen Zusammensetzung sich ausgehend von der der mit den Fasern gebildeten Struktur (1) zugewandten Oberfläche bis zur dieser gegenüber liegend angeordneten Oberfläche verändert.

8. Verbundbauteil nach einem der vorhergehenden Ansprüche, **dadurch gekennzeichnet, dass** Armierungselemente (3) in Bezug zu mindestens einer Achse, in der eine Kraftwirkung auf das Verbundbauteil wirkt, ausgerichtet oder
mehrere Armierungselemente (3) jeweils mit konstantem Abstand zu dem äußeren Rand von zumindest einem der aus Metall gebildeten Elemente (2) und/oder
jeweils in konstanten Abständen zueinander
angeordnet sind.

9. Verbundbauteil nach einem der vorhergehenden Ansprüche, **dadurch gekennzeichnet, dass** die Struktur (1) zwei- oder dreidimensional, mit Schlaufen, als ebene oder gekrümmte Fläche und
in Form eines Rovings, eines Bandes, eines Gestrickes, Gewebes, Gewirkes, als Filz, Matte, Netz, Gitter und/oder mehrlagig ausgebildet ist.

10. Verfahren zur Herstellung eines Verbundbauteils nach einem der vorhergehenden Ansprüche, **dadurch gekennzeichnet, dass** eine mit Fasern gebildete Struktur (1) an zwei gegenüberliegend angeordneten Oberflächen mit jeweils einem aus einem Metall gebildeten Element (2) verbunden wird,
indem
Armierungselemente (3) durch Frei- oder Hohlräume der Struktur (1) hindurch und in in den Elementen (2) ausgebildete Hohlräume eingeführt werden, wenn die Elemente (2) an zwei gegenüberliegenden Oberflächen der Struktur (1) angeordnet sind und im Anschluss daran eine stoffschlüssige Verbindung durch Sintern zwischen den Armierungselementen (3) und den Elementen (2) ausgebildet wird
und/oder
mindestens ein Element aus pulverförmigem Metall an einer Oberfläche der Struktur durch eine Sinterung unter Einsatz eines Formwerkzeuges ausgebildet wird, bei der eine stoff- und formschlüssige Verbindung zwischen Oberflächen von Fasern der Struktur (1) auch in Hohl- und/oder Freiräumen der Struktur (1) und/oder dem Metall des jeweiligen Elements (2) und Armierungselementen (3), die während der Sinterung teilweise von pulverförmigen Metall umschlossen sind, erreicht wird.

11. Verfahren nach dem vorhergehenden Anspruch, **dadurch gekennzeichnet, dass** eine Sinterung bei gleichzeitiger Druckkraftausübung auf das metallische Pulver, bevorzugt durch Heißpressen oder mittels Funkenentladungssintern durchgeführt wird.

12. Verfahren nach den zwei vorhergehenden Ansprüchen, **dadurch gekennzeichnet, dass** die Struktur (1) bei der Herstellung der stoffschlüssigen Verbindung mit ihrem äußeren Rand zwischen zwei Hälften eines Formwerkzeuges klemmend gehalten wird.

13. Verfahren nach den drei vorhergehenden Ansprüchen, **dadurch gekennzeichnet, dass** die Verbindung zwischen der Struktur (1) und den Elementen (2) so ausgebildet wird, dass die Struktur (1) in einem äußeren Randbereich über den äußeren Rand der Elemente (2) übersteht und
der überstehende Rand der Struktur (1) mit einer weiteren Struktur, die ebenfalls aus Fasern gebildet ist, formschlüssig und/oder stoffschlüssig verbunden und im Anschluss daran der überstehende Rand der Struktur (1) und zumindest der Bereich der weiteren Struktur, der mit der Struktur (1) verbunden ist, gemeinsam in eine Matrix, eines bevorzugt polymeren Werkstoffs eingebettet werden.

## Claims

1. A composite component in which a flat structure (1) formed with fibers and having free spaces and/or hollow spaces is encompassed
at least regionally at two oppositely disposed surfaces by a respective element (2) consisting of a metal, and the flat structure (1) is connected to the elements (2) with material continuity and/or with shape matching, wherein
a connection with material continuity and/or shape matching is achieved by sintering by means of reinforcement elements (3) that are led through hollow spaces or free spaces in the structure (1) and that are aligned perpendicular to the plane of the flat structure (1) at least in the region of the structure (1);
and
a connection of the structure (1) to the elements (2) with material continuity and/or shape matching has been achieved by a sintering of at least one metallic powder in which at least one metallic element (2) can be manufactured from the powder in that free spaces or hollow spaces of the structure (1) are filled with metal.

2. A composite component in accordance with claim 1, **characterized in that** reinforcement elements (3) are introduced into hollow spaces formed in the elements (2) and are fixed therein with material continuity by sintering to the elements (2).

3. A composite component in accordance with claim 1 or claim 2, **characterized in that** reinforcement elements (3) within the elements (2) obtained by sintering are connected to the elements (2) by the sintering with material continuity and/or shape matching, with the reinforcement elements preferably having a geometrical design differing from a straight line at least in a region perpendicular to the plane of the structure (1) to achieve a shape-matched connection.

4. A composite component in accordance with one of the preceding claims,
**characterized in that** one or more regions of the structure (1) projecting over the outer margin of the elements (2) are connected with shape matching and/or material continuity to a further structure formed with fibers and the fibers are preferably embedded in a metallic or polymer matrix at least in the connection region of the structure (1) with the further structure.

5. A composite component in accordance with one of the preceding claims,
**characterized in that** the fibers of the structure (1) and/or of the further structure are formed from a material that is selected from metals, glass, carbon, plastic, aramid, and ceramics; and
**in that** the reinforcement elements (3) are formed from a material that is selected from metals, plastic, and ceramics; and
**in that** the elements (2) are formed from a material that is selected from iron, copper, aluminum, titanium, and manganese or an alloy of these metals.

6. A composite component in accordance with one of the preceding claims,
**characterized in that** at least one element (2) is configured as a fastening element for or for a fastening of at least one further element.

7. A composite component in accordance with one of the preceding claims,
**characterized in that** at least one of the elements (2) is formed from a metallic material whose composition varies, starting from the surface facing the structure (1) formed by the fibers, up to the surface arranged disposed opposite it.

8. A composite component in accordance with one of the preceding claims,
**characterized in that** reinforcement elements (3) are aligned with respect to at least one axis in which a force effect acts on the composite component; or
**in that** a plurality of reinforcement elements (3) are each arranged at a constant spacing from the outer margin of at least one of the elements (2) formed from metal; and/or
are each arranged at constant intervals from one another.

9. A composite component in accordance with one of the preceding claims,
**characterized in that** the structure (1) is configured as two-dimensional or three-dimensional, with loops, as a planar or curved surface; and
in the form of a roving, of a band, of a knitted fabric, a web, a knitted web, as a felt, a mat, a net, a lattice, and/or in multiple layers.

10. A method of manufacturing a composite component in accordance with one of the preceding claims, **characterized in that** a structure (1) formed by fibers is connected at two surfaces arranged opposite one another to a respective element (2) formed from a metal,
**in that**
reinforcement elements (3) are introduced through free spaces or hollow spaces of the structure (1) and in hollow spaces formed in the elements (2) when the elements (2) are arranged at oppositely disposed surfaces of the structure (1) and a connection with material continuity is subsequently formed between the reinforcement elements (3) and the elements (2) by sintering;
and/or
at least one elements is formed from powdery metal at a surface of the structure by a sintering while using a mold tool in which a connection having material continuity and shape matching is achieved between surfaces of fibers of the structure (1), also in the hollow/and or free spaces of the structure (1), and/or the metal of the respective element (2); and
reinforcement elements (3) that are surrounded by powdery metal at least in part during the sintering.

11. A method in accordance with the preceding claim, **characterized in that** a sintering is carried out with a simultaneous exertion of compressive force onto the metallic powder, preferably by hot pressing or by means of spark discharge sintering.

12. A method in accordance with the two preceding claims, **characterized in that** the structure (1) is clampingly held at its outer margin between two halves of a mold tool in the manufacture of the connection with material continuity.

13. A method in accordance with the three preceding claims, **characterized in that** the connection between the structure (1) and the elements (2) is configured such that the structure (1) projects over the outer margin of the elements (2) in an outer marginal region; and
the projecting margin of the structure (1) is connected in a shape-matching manner and/or with material continuity to a further structure that is likewise formed from fibers and subsequently the projecting margin of the structure (1) and at least the region of the further structure that is connected to the structure (1) are together embedded into a matrix of a preferably polymer material.

## Revendications

1. Composant composite, dans lequel une structure plane (1) comprenant des espaces libres et/ou des espaces vides formés avec des fibres est intégrée au moins à certains endroits à deux surfaces opposées avec chacune un élément (2) constitué de métal et la structure plane (1) est reliée avec les éléments (2) par liaison de matière et/ou par complémentarité de forme,
une liaison par liaison de matière et/ou par complémentarité de forme est obtenue au moyen d'éléments d'armatures (3) guidés à travers des espaces vides ou des espaces libres dans la structure (1) à l'aide d'un frittage, qui sont orientés au moins au niveau de la structure (1) perpendiculairement au plan de la structure plane (1) ;
et
une liaison par liaison de matière et/ou par complémentarité de forme de la structure (1) avec les éléments (2) est obtenue par un frittage d'au moins une poudre métallique, dans laquelle au moins un élément métallique (2) peut être fabriqué à partir de la poudre, grâce au fait que les espaces livres ou vides de la structure (1) sont remplies de métal.

2. Composant composite selon la revendication 1, **caractérisé en ce que** des éléments d'armature (3) sont introduits dans des espaces vides réalisés dans les éléments (2) et y sont fixés par liaison de matière par frittage avec les éléments (2).

3. Composant composite selon la revendication 1 ou 2, **caractérisé en ce que** des éléments d'armature (3) sont reliés à l'intérieur des éléments (2) obtenus par frittage par liaison de matière et/ou par complémentarité de forme à l'aide d'un frittage, avec les éléments (2), les éléments d'armature présentant de préférence, au moins dans une zone, perpendiculairement au plan de la structure (1), une forme géométrique différente d'une droite, afin d'obtenir une liaison par complémentarité de forme.

4. Composant composite selon l'une des revendications précédentes, **caractérisé en ce qu'**une ou plusieurs partie(s) de la structure (1), dépassant du bord externe des éléments (2), sont reliées avec une autre structure formée avec des fibres par complémentarité de forme et/ou par liaison de matière et les fibres, au moins dans la partie de liaison de la structure (1) avec l'autre structure, sont intégrées de préférence dans une matrice métallique ou polymère.

5. Composant composite selon l'une des revendications précédentes, **caractérisé en ce que** les fibres de la structure (1) et/ou de l'autre structure est/sont constituées d'un matériau qui est sélectionné parmi des métaux, du verre, du carbone, une matière plastique, de l'aramide et de la céramique et
les éléments d'armature (3) sont constitués d'un matériau qui est sélectionné parmi des métaux, une matière plastique et de la céramique et
les éléments (2) sont constitués d'un matériau qui est sélectionné parmi le fer, le cuivre, l'aluminium, le titane et le manganèse ou un alliage de ces métaux.

6. Composant composite selon l'une des revendications précédentes, **caractérisé en ce qu'**au moins un élément (2) est conçu comme un élément de fixation pour ou pour une fixation d'au moins un autre élément.

7. Composant composite selon l'une des revendications précédentes, **caractérisé en ce qu'**au moins un élément (2) est constitué d'un matériau métallique dont la composition se modifie à partir de la surface orientée vers la structure (1) formée avec les fibres jusqu'à la surface opposée à cette surface.

8. Composant composite selon l'une des revendications précédentes, **caractérisé en ce que** des éléments d'armature (3) sont orientés par rapport à un axe dans lequel une force agit sur le composant composite ou
plusieurs éléments d'armature (3) sont disposés à une distance constante par rapport au bord externe d'au moins un des éléments (2) constitués de métal et/ou sont disposés à des distances constantes entre eux.

9. Composant composite selon l'une des revendications précédentes, **caractérisé en ce que** la structure (1) présente une forme bidimensionnelle ou tridimensionnelle, avec des boucles, sous la forme d'une surface plane ou courbe et sous la forme d'un roving, d'une bande, d'un tissu tricoté, d'un tissu, d'un tricot, d'un feutre, d'une natte, d'une grille et/ou avec plusieurs couches.

10. Procédé de fabrication d'un composant composite selon l'une des revendications précédentes, **caractérisé en ce qu'**une structure (1) formée avec des fibres est reliée à deux surfaces opposées, avec chacune un élément (2) constitué d'un métal,
grâce au fait que
des éléments d'armature (3) sont introduits à travers des espaces libres ou vides de la structure (1) et dans des espaces vides formés dans les éléments (2), lorsque les éléments (2) sont disposés au niveau de deux surfaces opposées de la structure (1) puis une liaison par liaison de matière est réalisée par frittage entre les éléments d'armature (3) et les éléments (2)
et/ou
au moins un élément en métal pulvérulent est réalisé au niveau d'une surface de la structure par un frittage à l'aide d'un outil de moulage, dans lequel une liaison par liaison de matière et par complémentarité de forme est obtenue entre les surfaces des fibres de la structure (1) également dans les espaces vides et/ou libres de la structure (1) et/ou le métal de l'élément (2) correspondant et des éléments d'armature (3), qui sont entourés partiellement, pendant le frittage, par le métal pulvérulent.

11. Procédé selon la revendication précédente, **caractérisé en ce qu'**un frittage est effectué en exerçant simultanément une pression sur la poudre métallique, de préférence par pressage à chaud ou par frittage à décharge à étincelles.

12. Procédé selon les deux revendications précédentes, **caractérisé en ce que** la structure (1) est maintenue, lors de la fabrication de la liaison par liaison de matière, avec son bord externe, serrée entre deux moitiés d'un outil de moulage.

13. Procédé selon les trois revendications précédentes, **caractérisé en ce que** la liaison entre la structure (1) et les éléments (2) est réalisée de façon à ce que la structure (1) dépasse, dans une zone de bord externe, du bord externe des éléments (2) et
le bord dépassant de la structure (1) est relié par complémentarité de forme et/ou par liaison de matière avec une autre structure, qui est également constituée de fibres puis le bord dépassant de la structure (1) et au moins la partie de l'autre structure qui est reliée avec la structure (1) sont intégrés ensemble dans une matrice d'un matériau, de préférence un polymère.
